# EUROPÄISCHE PATENTSCHRIFT

(11) **EP 3 621 482 B1**
(45) Veröffentlichungstag und Bekanntmachung des Hinweises auf die Patenterteilung: **01.02.2023**
(21) Anmeldenummer: 17780226.1
(22) Anmeldetag: 09.05.2017
(51) Int. Cl.: A47B 88/95

(54) **HALTEVORRICHTUNG FÜR EINE FRONTBLENDE EINER SCHUBLADE**
RETAINING DEVICE FOR A FRONT PANEL OF A DRAWER
DISPOSITIF DE RETENUE DESTINÉ À UNE FAÇADE DE TIROIR

(43) Veröffentlichungstag der Anmeldung: 18.03.2020
(73) Patentinhaber: Samet Kalip Ve Madeni Esya San. Ve Tic. A.S., 34513 Esenyurt/Istanbul (TR)
(72) Erfinder: PRENTNER, Christian, 6844 Altach (AT); BEKTAS, Mehmet, Avcilar/Istanbul (TR)
(74) Vertreter: Herrmann, Jochen
(86) Internationale Anmeldenummer: PCT/TR2017/000049
(87) Internationale Veröffentlichungsnummer: WO 2018/208238

(56) Entgegenhaltungen:
- WO-A1-2012/171047
- DE-A1-102014 011 090
- DE-U1-202015 102 087

## Beschreibung

Die Erfindung betrifft eine Befestigungseinrichtung zur Befestigung einer Frontblende einer Schublade an einer Schubladenzarge, mit einem an der Frontblende befestigbaren Halteelement und einem an der Schubladenzarge befestigbaren Verschlusselement, wobei das Verschlusselement einen Träger und einen um eine Drehachse drehbar an dem Träger gelagerten Verschluss mit einem Halteabschnitt aufweist, wobei eine Feder mit dem Verschluss in Wirkverbindung steht und wobei der Verschluss dazu ausgebildet ist, in einer geöffneten Drehposition des Verschlusses einen Haltebereich des Halteelements freizugeben und in einer Schließposition des Verschlusses den Haltebereich zu blockieren.

Eine solche Haltevorrichtung ist aus der EP 0 740 917 A1 bekannt. Dabei sind ein Halteteil an einer Frontblende und ein Tragteil an einer Schubladenzarge einer Schublade angeordnet. Dem Tragteil ist ein als drehbar gelagerter, federvorgespannter Kipphebel ausgebildetes Arretierteil zugeordnet. Zur Befestigung der Frontblende an der Schubladenzarge kann das Halteteil in das Tragteil eingeschoben werden, wobei der Kipphebel aufgrund der Federwirkung an dem Halteteil einrastet. Dem Kipphebel ist eine Aufnahme für einen Schraubendreher oder dergleichen zugeordnet, mit welchem er entgegen der Federwirkung aus der Schließstellung drehbar ist und dabei das Halteteil freigibt.

Entsprechend in der EP 0 740 917 A1 gezeigter Ausführungsbeispiele kann der Kipphebel an seinem äußeren Rand eine Einkerbung aufweisen. Diese ist in einer ersten Drehstellung des Kipphebels zur Frontblende hin ausgerichtet, sodass beim Einschieben ein Abschnitt des Halteteils in die Einkerbung eingreift und dabei den Kipphebel entgegen der einwirkenden Federkraft verdreht. Eine Feder ist unmittelbar mit dem Kipphebel verbunden. Beim Einschieben des Halteteils und der damit verbundenen Drehung des Kipphebels überschreitet die Lagerung der Feder an dem Kipphebel einen Totpunkt und wirkt anschließend in Schließrichtung des Kipphebels. Dadurch wird das Halteteil in das Tragteil eingezogen. Um ein unbeabsichtigtes Öffnen des Kipphebels durch Ziehen an der Frontblende zu vermeiden, wird dieser durch ein zusätzliches Blockierelement, welches in der Schließstellung des Kipphebels an diesem angreift, in Umfangsrichtung blockiert. Zum Öffnen der Verbindung zwischen dem Halteteil und dem Tragteil wird ein Schraubendreher in die vorgesehene Aufnahme eingeführt und der Kipphebel entgegen der Federkraft aufgedreht. Dabei verstellt der Schraubendreher gleichzeitig das Blockierelement, sodass der Kipphebel freigegeben ist. Beim Herausziehen des Halteteils aus dem Tragteil überschreitet die Lagerung der Feder wieder den Totpunkt, sodass der vollständig geöffnete Kipphebel in seiner geöffneten Position verbleibt.

Nachteilig bei dieser Anordnung ist, dass die Feder derart zu dem Kipphebel hin ausgerichtet und mit diesem verbunden sein muss, dass sie bei einer Drehbewegung des Kipphebels in Verlängerung ihrer Mittenachse den Drehpunkt des Kipphebels schneidet, um so einen Totpunkt auszubilden. Es ergibt sich dadurch ein langgezogener Aufbau mit hohem Raumbedarf, der entsprechend große Montagebereiche an der Schublade erfordert. Ein weiterer Nachteil ergibt sich daraus, dass die Anordnung nicht selbsthemmend ausgebildet werden kann. Dadurch sind zusätzliche Blockierelemente zur Festlegung des Kipphebels vorzusehen sind, welche gleichzeitig mit dem Eingriff des Schraubendrehers in die zugewiesene Werkzeugaufnahme des Kipphebels zur Öffnung des Verschlusses von diesem mit geöffnet werden müssen. Der Schraubendreher muss demnach sowohl zum Eingriff in die Werkzeugaufnahme als auch zur Betätigung des Blockierelements ausgebildet sein.

Entsprechend einer weiteren in der EP 0 740 917 A1 gezeigten, selbsthemmenden Ausführungsvariante wird der Kipphebel mittels einer Schenkelfeder um seine Drehachse in den Stellweg des Halteteils verstellt. Er liegt dabei in seiner geschlossenen Position mit seiner Stirnkante an einer zur Frontblende hin ausgerichteten Abstützfläche des Halteteils an. Nachteilig wird bei dieser Anordnung das Halteteil nicht aufgrund der Federkraft von dem Kipphebel in das Tragteil hineingezogen. Die Frontblende mit dem Halteteil muss somit exakt gegenüber der Schubladenzarge mit dem Tragteil ausgerichtet sein, um eine spielfreie Montage der Frontblende zu ermöglichen. Bereits geringe Positionierungsfehler des Halteteils und des Tragteils führen dazu, dass die Frontblende nicht fest an der Schubladenzarge anliegt oder das das Halteteil nicht ausreichend weit in das Tragteil eingeschoben werden kann, um den Kipphebel in seine geschlossene Position zu verstellen und das Halteteil zu blockieren.

Die WO 2012 / 171 047 A1 offenbart eine Befestigungsvorrichtung zur lösbaren Befestigung einer Frontblende an einer Schublade mit wenigstens einem an der Frontblende vormontierten Möbelbeschlag mit einem ersten und einem zweiten Verbindungselement für die Befestigung der Frontblende an der Schublade, wenigstens zwei der Schublade zugeordneten Fangvorrichtungen und wenigstens einer Verriegelungsvorrichtung für die beiden Fangvorrichtungen. Ferner ist eine Entriegelungsvorrichtung vorgesehen, welche ein gemeinsames Lösen der beiden Fangvorrichtungen ermöglicht.

Die DE 10 2014 011 090 A1 offenbart einen Befestigungsbeschlag für einen Blende an einer offenen Stirnseite einer Schublade. Damit die Blende in der eingeschobenen Endstellung in der Höhe und der seitlichen horizontalen Einstellung in einem Möbelkorpus exakt eingestellt werden kann, ist der Blendenbeschlag mit einem horizontal ausgerichteten und zur Rückseite der Blende beabstandeten Kupplungsbolzen versehen. Dabei erfolgt eine exakte Einstellung der vertikalen und horizontalen Position durch Einstellelemente, über welche eine Veränderung der Position relativ zu den Kupplungsbolzen möglich ist.

Aus der DE 20 2015 102 087 U1 ist ein Demontage- und Montage-Einstell-Einrichtung zur Verwendung für eine Schubladenblende bekannt. Die Einstelleinrichtung umfasst eine Seitenplatte, die mit einer Demontage- und Einstell-Einrichtung versehen ist sowie eine Blende, die mit einem Verbinder versehen ist, der mit der Einstelleinrichtung verriegelt ist und dessen Verbindung mit der Seitenplatte bewirkt.

Es ist somit Aufgabe der Erfindung, eine Haltevorrichtung für eine Frontblende einer Schublade bereitzustellen, welche bei platzsparendem Aufbau eine exakte Positionierung der Frontblende ermöglicht.

Die Aufgabe der Erfindung wird dadurch gelöst, dass ein Übertragungselement über eine verschlussseitige Dreh-/Schiebeverbindung beabstandet zu der Drehachse des Verschlusses an diesem angelenkt ist, dass an dem Übertragungselement gegenüberliegend zu der verschlussseitigen Dreh-/Schiebeverbindung eine öffnerseitige Dreh-/Schiebeverbindung mit einem Lagerelement angeordnet ist, dass die öffnerseitige Dreh-/Schiebeverbindung eine Verbindung zu einem beweglich gelagerten Öffner herstellt, dass die öffnerseitige Dreh-/Schiebeverbindung eine erste und eine zweite Steuerkurve aufweist, an denen das Lagerelement geführt ist, und dass sich die beiden Steuerkurven kreuzen. Mittels des Öffners kann der Verschluss von seiner geschlossenen Stellung in seine geöffnete Stellung verstellt werden. Durch das Übertragungselement können der Verschluss und der Öffner als separate Bauteile ausgeführt werden. Dadurch kann die Bauteilgröße als auch der Stellweg sowohl des Verschlusses als auch des Öffners derart optimiert werden, dass sie jeweils nur einen geringen Platzbedarf aufweisen. Die sich kreuzenden Steuerkurven ermöglichen eine Optimierung der Kraftübertragung zwischen dem Öffner und dem Übertragungselement. Sie ermöglichen weiterhin, dass bei geringen Verstellwegen des Öffners und des Übertragungselements eine ausreichend große Verstellung des Verschlusses erreicht wird.

Vorzugsweise kann es vorgesehen sein, dass die erste Steuerkurve an dem Träger angeordnet ist und/oder dass die zweite Steuerkurve an dem Öffner angeordnet ist. Durch die an dem Träger angeordnete erste Steuerkurve kann die Bewegung des Übertragungselements beim Öffnen bzw. Schließen des Verschlusses vorgegeben werden. Die zweite Steuerkurve an dem Öffner ermöglicht es, dass das Übertragungselement der ersten Führungskurve folgen kann und gleichzeitig an dem Öffner angekoppelt ist.

Die Kraftübertragung zwischen dem Öffner und dem Übertragungselement sowie der platzsparende Bewegungsablauf des Übertragungselements und/oder des Öffners können dadurch weiter verbessert bzw. minimiert werden, dass zumindest eine der Steuerkurven gebogen verläuft.

Um die Kraftübertragung zwischen dem Öffner und dem Übertragungselement sowie die geführte Bewegung des Übertragungselements zu ermöglichen kann es vorgesehen sein, dass das Lagerelement mit dem Übertragungselement verbunden ist.

Entsprechend einer besonders bevorzugten Ausgestaltungsvariante der Erfindung kann es vorgesehen sein, dass die Feder quer zur Ausrichtung der ersten Steuerkurve auf das Lagerelement wirkt und dass die Feder das Lagerelement bei geschlossenem Verschluss in eine erste Endposition und bei geöffnetem Verschluss in eine gegenüberliegende zweite Endposition der ersten Steuerkurve drückt oder zieht. Die erste Steuerkurve definiert somit zwei stabile Stellungen, zwischen denen das Lagerelement und damit das Übertragungselement verstellt werden kann. Dabei ist eine Endposition dem geöffneten und die andere Endposition dem geschlossenen Verschluss zugeordnet.

Die erste Steuerkurve ist vorzugsweise entgegen der einwirkenden Federkraft gewölbt ausgebildet. Die Wölbung der ersten Steuerkurve bewirkt, dass das Lagerelement durch die einwirkende Federkraft in die eine oder andere Endposition gedrückt und dort gehalten wird. Die Federkraft wird somit durch die erste Steuerkurve in oder entgegen der Bewegungsrichtung des Übertragungselements umgelenkt. Beim Schließen des Verschlusses wird durch das Halteelement eine Kraft von dem Verschluss auf das Übertragungselement übertragen. Diese bewirkt, dass sich das Lagerelement entlang der ersten Steuerkurve von der zweiten in die erste Endposition bewegt. Dabei wirkt die Federkraft zunächst der Schließbewegung entgegen, bis das Lagerelement einen Scheitelpunkt der ersten Steuerkurve überschreitet. Anschließend wirkt die Feder in Richtung der Verstellung des Lagerelements in die erste Endposition. Die Federkraft wird somit über das Übertragungselement auf den Verschluss übertragen, der ab einer entsprechenden Schließstellung selbsttätig schließt und dabei das Halteelement einzieht. Dadurch wird die Frontblende in ihre gewünschte Position gegenüber der Schubladenzarge gezogen. Durch eine Betätigung des Öffners ist das Lagerelement aus der ersten Endposition der ersten Steuerkurve in die zweite Endposition der ersten Steuerkurve verstellbar. Dadurch wird der Verschluss geöffnet. Beim Öffnen wirkt die Feder nach Überschreiten des Scheitelpunktes der ersten Steuerkurve in Öffnungsrichtung des Verschlusses, so dass dieser in seinem letzten Bewegungsabschnitt selbsttätig öffnet.

Der Verschluss kann dadurch einfach von seiner geschlossenen in seine geöffnete Stellung verstellt werden, dass durch eine Drehbewegung des Öffners das Lagerelement aus der ersten Endposition der ersten Steuerkurve in die zweite Endposition der ersten Steuerkurve verstellbar ist.

Erfindungsgemäß ist vorgesehen, dass das Lagerelement entlang der zweiten Steuerkurve bei geschlossenem Verschluss auf einem größeren und bei geöffnetem Verschluss auf einem kleineren Radius, bezogen auf den Drehpunkt des Öffners, angeordnet ist. Die die erste Steuerkurve kreuzende zweite Steuerkurve ermöglicht durch ihre radiale Ausrichtungskomponente die Verstellung des Lagerelements entlang der ersten Steuerkurve bei gleichzeitiger Kopplung an dem Öffner.

Entsprechend einer bevorzugten Ausgestaltungsvariante der Erfindung kann es vorgesehen sein, dass die zweite Steuerkurve in ihrem auf einem kleineren Radius um den Drehpunkt des Öffners liegenden Endbereich entgegengesetzt zur Drehrichtung des Öffners beim Öffnen des Verschlusses gebogen ist. Durch die Biegung der zweiten Steuerkurve wird bei einer vergleichsweise geringen Drehung des Öffners eine große Verstellung des Übertragungselements und damit des Verschlusses erreicht. Dies führt zu einem kompakten Aufbau der Befestigungseinrichtung.

Besonders bevorzugt kann es vorgesehen sein, dass die erste Steuerkurve im Bereich ihrer ersten Endposition derart quer zur Krafteinwirkung des Übertragungselements ausgerichtet ist, dass das Lagerelement bei geschlossenem Verschluss selbsthemmend in der ersten Endposition gehalten ist. Eine Zugbelastung, wie sie beispielsweise beim Aufziehen der Schublade über die Frontblende und das daran angebrachte Halteelement auf den Verschluss übertragen wird, führt auf Grund der Selbsthemmung somit nicht zum Öffnen des Verschlusses. Die Frontblende ist entsprechend sicher an der Schubladenzarge gehalten und kann nur durch eine entsprechende Betätigung des Öffners gelöst werden.

Ein kompakter Aufbau der Befestigungseinrichtung kann dadurch erreicht werden, dass das Übertragungselement über eine verschlussseitige Dreh-/Schiebeverbindung beabstandet zu der Drehachse des Verschlusses an diesem angelenkt ist, dass die verschlussseitige Dreh-/Schiebeverbindung eine erste und eine zweite Führungskurve aufweist, und dass sich die beiden Führungskurven kreuzen. Durch die Verwendung des Übertragungselements muss die Feder nicht in Richtung der Drehachse des Verschlusselements ausgerichtet werden. Dadurch ergibt sich ein sehr kompakter Aufbau der Befestigungseinrichtung. Durch die sich kreuzenden Führungskurven wird eine optimierte Krafteinleitung von dem Übertragungselement zu dem Verschluss ermöglicht. Dabei wird gleichzeitig der Raumbedarf des Übertragungselements zur Durchführung seiner Einstellbewegung minimiert, um die erforderliche Drehbewegung des Verschlusses zu ermöglichen.

Die Erfindung wird im Folgenden anhand eines in den Zeichnungen dargestellten Ausführungsbeispiels näher erläutert. Es zeigen:
- Figur 1: in einer Seitenansicht eine Befestigungseinrichtung zur Befestigung einer Frontblende einer Schublade an einer Schubladenzarge mit einem Halteelement und einem Verschlusselement in einer geöffneten Position,
- Figur 2: die in Figur 1 gezeigte Befestigungseinrichtung in einer Explosionsdarstellung,
- Figur 3: in einer Seitenansicht einen Träger der Befestigungseinrichtung,
- Figur 4: in einer Seitenansicht einen Verschluss der Befestigungseinrichtung,
- Figur 5: in einer Seitenansicht einen Öffner der Befestigungseinrichtung,
- Figur 6: in einer Seitenansicht die in Figur 1 gezeigte Befestigungseinrichtung in geschlossener Position und
- Figur 7: in einer Vorderansicht den Träger und einen Aufnahmerahmen der Befestigungseinrichtung.

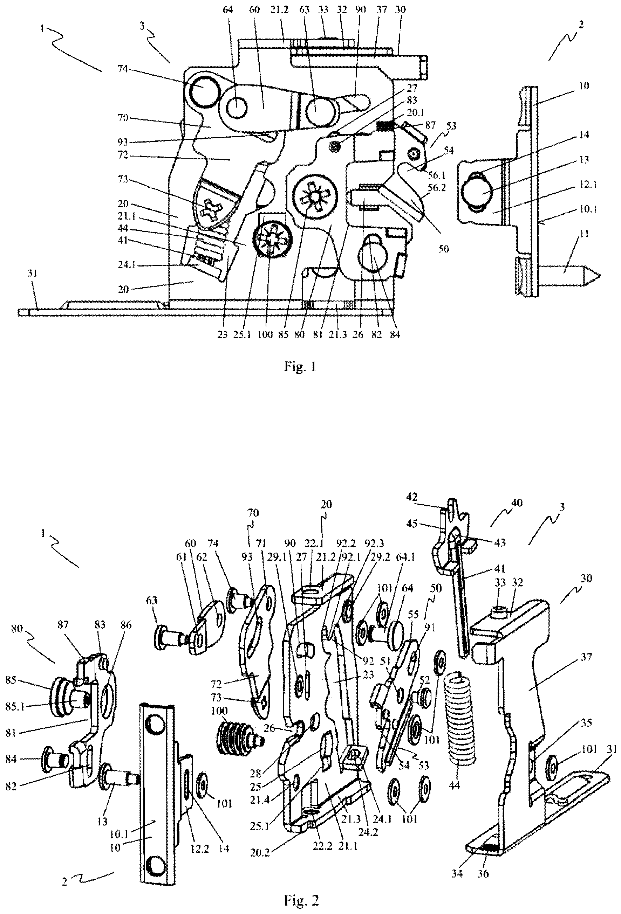

Figur 1 zeigt in einer Seitenansicht eine Befestigungseinrichtung 1 zur Befestigung einer Frontblende einer Schublade an einer Schubladenzarge mit einem Halteelement 2 und einem Verschlusselement 3 in einer geöffneten Position.

Das Halteelement 2 weist einen Blendenhalter 10 auf. Der Blendenhalter 10 bildet eine Montagefläche 10.1 aus, mit welcher er an der Innenseite der nicht dargestellten Frontblende angelegt werden kann. Der Blendenhalter 10 kann dann mittels Befestigungselementen 11 an der Frontblende befestigt werden. Gegenüberliegend zu der Montagefläche 10.1 sind beabstandet zueinander zwei Führungsabschnitte 12.1, 12.2 an den Blendenhalter 10 angeformt. Die Führungsabschnitte 12.1, 12.2 sind in einem Winkel, vorzugsweise von 90°, zu der Montagefläche 10.1 ausgerichtet. Es ist jedoch auch denkbar, die Führungsabschnitte 12.1, 12.2 leicht geneigt zueinander auszurichten, um ein leichteres Einfahren der Befestigungseinrichtung 1 zu ermöglichen. Der in Figur 2 gezeigte zweite Führungsabschnitt 12.2 ist in der gewählten Darstellung von dem ersten Führungsabschnitt 12.1 verdeckt angeordnet. Die Führungsabschnitte 12.1, 12.2 sind jeweils von einer Fangbolzenaufnahme 14 durchbrochen. Die Fangbolzenaufnahmen 14 sind als Langlöcher ausgebildet. Sie sind in Richtung der Ebene der Montagefläche 10.1 ausgerichtet. In den Fangbolzenaufnahmen 14 ist ein Fangbolzen 13 festgelegt. Die Position des Fangbolzens 13 kann entlang der Fangbolzenaufnahmen 14 eingestellt werden. Der Blendenhalter 10 mit den angeformten Führungsabschnitten 12.1, 12.2 ist als Blechstanzteil ausgebildet.

Dem Verschlusselement 3 ist ein Träger 20 zugeordnet. Der Träger 20 ist vorliegend als Stanzteil aus einem Blech gefertigt. Er weist einen Montagebereich 21.1 auf. An den Montagebereich 21.1 sind, bezogen auf eine Einbausituation an einer nicht gezeigten Schublade, an einem oberen Ende ein oberer Anlagebereich 21.2 und an einem unteren Ende ein unterer Anlagebereich 21.3 angeformt. Der obere Anlagebereich 21.2 und der unterer Anlagebereich 21.3 sind in einem Winkel zu dem Montagebereich 21.1 hin zu einem Aufnahmerahmen 30 des Verschlusselements 3 ausgerichtet. Der Aufnahmerahmen 30 ist in der gewählten Darstellung fast vollständig von dem Träger 20 verdeckt angeordnet. Er ist vorliegend ebenfalls als Blechstanzteil ausgebildet. Der Aufnahmerahmen 30 weist einen Mittenabschnitt 37 auf, der beabstandet zu dem Montagebereich 21.1 des Trägers 20 angeordnet ist. Am oberen Ende des Mittenabschnitts 37 ist ein Rahmendeckel 32 und am unteren Ende ein Rahmenboden 31 angeformt. Dabei sind der Rahmendeckel 32 und der Rahmenboden 31 in einem Winkel zum Mittenabschnitt 37 und zum Träger 20 hin weisend ausgerichtet. Der Rahmendeckel 32 liegt somit an dem oberen Anlagebereich 21.1 des Trägers 20 an oder ist gering beabstandet zu diesem angeordnet. Der Rahmenboden 31 liegt an dem unteren Anlagebereich 21.3 des Trägers 20 an oder ist gering beabstandet zu diesem angeordnet.

Der Rahmendeckel 32 ist mittels eines Lagerzapfens 33 schwenkbar mit dem oberen Anlagebereich 21.2 des Trägers 20 verbunden. Gegenüberliegend ist der Rahmenboden 31 über eine nicht dargestellte Niete schwenkbar mit dem unteren Anlagebereich 21.3 verbunden. Der Lagerzapfen 33 und die nicht dargestellte Niete bildeten eine Schwenkachse aus, um die der Träger 20 gegenüber dem Aufnahmerahmen 30 in einem vorgegebenen Winkelbereich geschwenkt werden kann. Es ist auch denkbar, an Stelle des Lagerzapfens 33 eine zweite Niete vorzusehen. Die schwenkbare Verbindung zwischen dem Träger 20 und dem Aufnahmerahmen 30 ist dann durch die beiden Nieten hergestellt. Die Schwenkachse des Trägers 20 verläuft bei dieser Ausführungsvariante entlang der Achse der fluchtend zueinander ausgerichteten Nieten.

Dem Halteelement 2 zugewandt ist eine Fangbolzenführung 26 in den Montagebereich 21.1 des Trägers 20 eingearbeitet. Die Fangbolzenführung 26 ist als ein von der dem Halteelement 2 zugewandten Kante des Montagebereichs 21.1 ausgehender, länglicher Durchbruch ausgebildet. Das Halteelement 2 ist derart gegenüber dem Verschlusselement 3 ausgerichtet, dass der Fangbolzen 13 auf Höhe der Fangbolzenführung 26 angeordnet ist. Das Halteelement 2 kann so an das Verschlusselement 3 herangeschoben werden. Dabei werden die Führungsabschnitte 12.1, 12.2 seitlich an dem Montagebereich 21.1 vorbeigeführt. Gleichzeitig wird der Fangbolzen 13 in die Fangbolzenführung 26 eingeschoben und in dieser geführt. Zu ihrer Öffnung hin ist die Fangbolzenführung 26 durch angeformte Schrägen aufgeweitet. Dadurch wird beim Zusammenschieben des Halteelements 2 und des Verschlusselements 3 der Fangbolzen 13 zu der Fangbolzenführung 26 geführt.

An dem Montagebereich 21.1 des Trägers 20 ist eine Höhenverstelleinheit 80 befestigt. Die Höhenverstelleinheit 80 ist als Blechstanzteil ausgebildet. Sie liegt flächig an dem Montagebereich 21.1 an. Die Höhenverstelleinheit 80 ist im Wesentlichen U-förmig ausgebildet. Sie bildet so einen in Richtung zu dem ersten Führungsabschnitt 12.1 des Halteelements 2 hin geöffneten Aufnahmebereich 81 aus. Der Aufnahmebereich 81 entspricht in seiner Kontur der äußeren Kontur des ersten Führungsabschnittes 12.1. Beim Zusammenschieben des Halteelements 2 und des Verschlusselements 3 wird der erste Führungsabschnitt 12.1 in den Aufnahmebereich 81 der Höhenverstelleinheit 80 eingeschoben und von diesem geführt. Die Höhenverstelleinheit 80 gibt somit die exakte Ausrichtung des Halteelements 2 gegenüber dem Verschlusselement 3 vor. Die Höhenverstelleinheit 80 ist linear verstellbar mit dem Montagebereich 21.1 verbunden. Dazu weist die Höhenverstelleinheit 80 an einem ersten Montagepunkt ein Langloch 82 auf. Ein Bolzen 84 ist durch das Langloch 82 geführt und in einer in Figur 2 gezeigten Bohrung 21.4 im Montagebereich 21.1 des Trägers 20 festgelegt. An einem zweiten Montagepunkt ist ein Führungszapfen 83 an der Höhenverstelleinheit 80 angeformt. Der Führungszapfen 83 ist in Richtung einer Führungszapfen-Aufnahme 27 ausgerichtet und in dieser geführt. Die Führungszapfen-Aufnahme 27 ist dabei als Langloch in dem Montagebereich 21.1 des Trägers 20 ausgebildet, wie dies näher aus der Darstellung in Figur 2 zu entnehmen ist. Das Langloch 82 und die Führungszapfen-Aufnahme 27 sind in ihrer Längserstreckung quer zur Einschieberichtung des ersten Führungsabschnittes 12.1 des Blendenhalters 10 ausgerichtet. Die relative Position des Halteelements 2 gegenüber dem Verschlusselement 3 kann somit durch entsprechende Positionierung der Höhenverstelleinheit 80 quer zur Einschieberichtung des ersten Führungsabschnittes 12.1 in den Aufnahmebereich 81 vorgegeben werden. Dabei kann der Fangbolzen 13 innerhalb der Fangbolzenaufnahmen 14 derart verstellt werden, dass der Fangbolzen 13 exakt zur Fangbolzenführung 26 ausgerichtet ist. Die lineare Verstellung der Höhenverstelleinheit 80 erfolgt durch Betätigung eines dafür vorgesehenen Exzenters 85. An dem Träger 20 sind Höhen-Rastnuten 20.1 eingearbeitet. An der Höhenverstelleinheit 80 ist ein Rastansatz 87 angeformt, welcher in die Höhen-Rastnuten 20.1 eingreift. Durch Betätigung des Exzenters 85 kann die Höhenverstelleinheit 80 somit in durch die Höhen-Rastnuten 20.1 vorgegebenen Schritten verstellt werden. Dabei ist vorliegend eine Höhenverstellung von ± 2mm, bezogen auf die Fangbolzenführung 26, vorgesehen. Die Höhen-Rastnuten 20.1 weisen vorliegend einen Abstand von jeweils 0,35 mm auf. Damit ist eine Rasterung der Höhenverstellung von 0,35 mm vorgegeben.

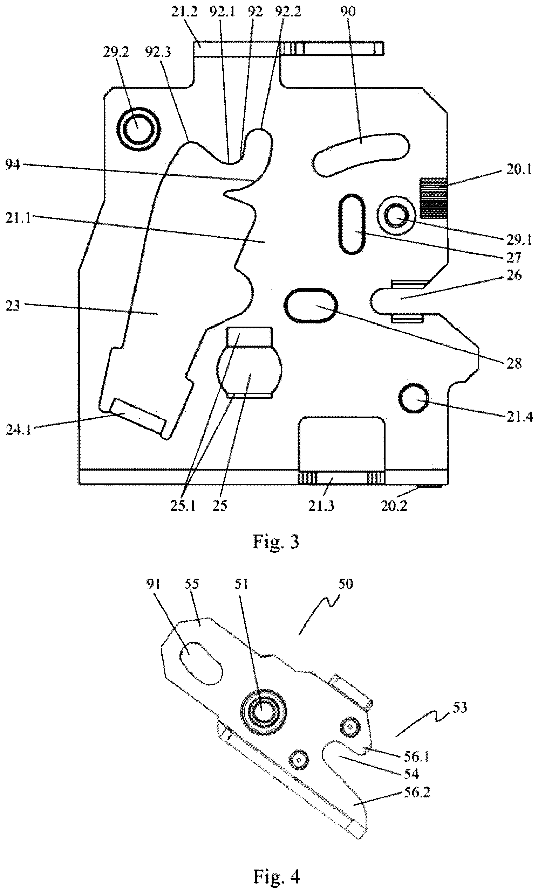

An dem Träger 20 ist ein Verschluss 50 schwenkbar befestigt. Der Verschluss 50 ist vorliegend als Blechstanzteil hergestellt. Wie insbesondere Figur 4 genauer zu entnehmen ist, weist der Verschluss 50 eine Verschluss-Bolzenaufnahme 51 auf, welche den Drehpunkt des Verschlusses 50 ausbildet. Radial beabstandet zu der Verschluss-Bolzenaufnahme 51 ist der Verschluss 50 von einer zweiten Führungskurve 91 durchbrochen. Die zweite Führungskurve 91 ist leicht gebogen ausgebildet. Sie ist im Wesentlichen radial ausgerichtet. Die zweite Führungskurve 91 ist in einem Ankoppelbereich 55 des Verschlusses 50 angeordnet. Gegenüberliegend zu dem Ankoppelbereich 55 ist eine Klaue 53 an den Verschluss 50 angeformt. Die Klaue 53 weist eine länglich ausgebildete Klauenausnehmung 54 auf. Diese ist seitlich durch Klauenbacken 56.1, 56.2 begrenzt. Dabei ist eine vordere Klauenbacke 56.1 gegenüber einer hinteren Klauenbacke 56.2 verkürzt ausgebildet.

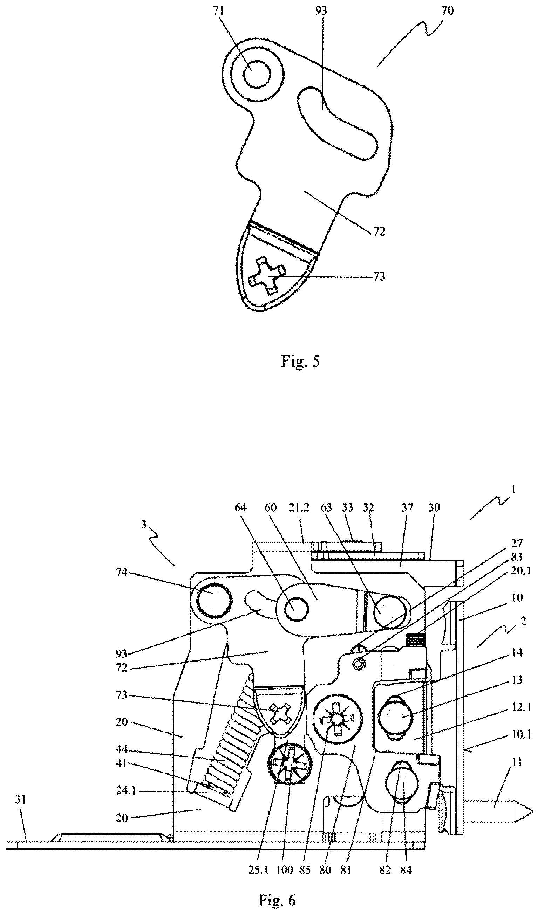

In der geöffneten Position der Befestigungseinrichtung 1, wie sie in Figur 1 gezeigt ist, ist der Verschluss 50 derart gedreht, dass die Klauenausnehmung 54 mit ihrer Öffnung in Richtung hin zum Fangbolzen 13 des Blendenhalters 10 weist. Die Klauenausnehmung 54 ist dabei schräg zur Einschieberichtung des Halteelements 2 ausgerichtet. Durch die verkürzt ausgebildete vordere Klauenbacke 56.1 wird der Fangbolzen 13 beim Einschieben an dieser vorbeigeführt, sodass er an der verlängerten hinteren Klauenbacke 56.2 anstößt. Durch entsprechende Krafteinwirkung beim Einschieben des Halteelements 2 wird der Verschluss 50 um seine Drehachse gedreht und der Fangbolzen 13 in die Fangbolzenführung 26 eingeführt. Der Fangbolzen 13 ist in der Schließposition der Befestigungseinrichtung 1, wie diese in Figur 6 gezeigt ist, durch die Fangbolzenführung 26 und die quer dazu ausgerichtete Klauenausnehmung 54 gehalten.

Figur 3 zeigt in einer Seitenansicht den Träger 20 der Befestigungseinrichtung 1. Wie bereits beschrieben, ist an den Montagebereich 21.1 des Trägers 20 ein oberer Anlagebereich 21.2 und ein unterer Anlagebereich 21.3 in einem Winkel angeformt. Die Fangbolzenführung 26 ist als geradlinig verlaufender, zu der dem Halteelement 2 zugewandten Kante des Montagebereichs 21.1 hin geöffneter Durchbruch ausgebildet. Die Höhen-Rastnuten 20.1 sind als in Richtung der Längserstreckung der Fangbolzenführung 26 verlaufende Rillen in die Oberfläche des Montagebereichs 21.1 eingeformt.

Seitlich versetzt zu der Fangbolzenführung 26 ist eine Verschluss-Achsaufnahme 29.1 als Bohrung in der Montagebereich 21.1 eingebracht. Die Verschluss-Achsaufnahme 29.1 dient der schwenkbaren Befestigung des Verschlusses 50 an dem Träger 20. Beabstandet zu der Verschluss-Achsaufnahme 29.1 ist eine erste Führungskurve 90 angeordnet. Die erste Führungskurve 90 ist als langgezogener Durchbruch in den Montagebereich 21.1 eingeformt. Sie verläuft gekrümmt. Dabei ist die erste Führungskurve 90 über einen begrenzten Winkelbereich umlaufend zu der Verschluss-Achsaufnahme 29.1 angeordnet. Entlang des Verlaufs der ersten Führungskurve 90 verändert sich deren Abstand zu der Drehachse des Verschlusses 50. Die Drehachse des Verschlusses 50 verläuft entlang der Mittellinie der Verschluss-Achsaufnahme 29.1.

Die Führungszapfen-Aufnahme 27 ist seitlich versetzt neben der Verschluss-Achsaufnahme angeordnet 29.1. In den Montagebereich 21.1 ist weiterhin eine als Langloch ausgebildete Exzenteraufnahme 28 eingeformt. Die Exzenteraufnahme 28 dient der Aufnahme und Führung einer exzentrisch an dem in Figur 1 gezeigten Exzenter 85 angeordneten Exzenternocke 85.1, wie sie in Figur 2 gezeigt ist.. Durch den Eingriff der Exzenternocke 85.1 in die Exzenteraufnahme 28 kann die Höhenverstelleinheit 80 durch entsprechende Betätigung des Exzenters 85 verstellt werden. Der Montagebereich 21.1 ist weiterhin von der Bohrung 21.4 durchbrochen, in welcher der in Figur 1 gezeigte Bolzen 84 zur linear verstellbaren Befestigung der Höhenverstelleinheit 80 an dem Träger 20 festgelegt ist.

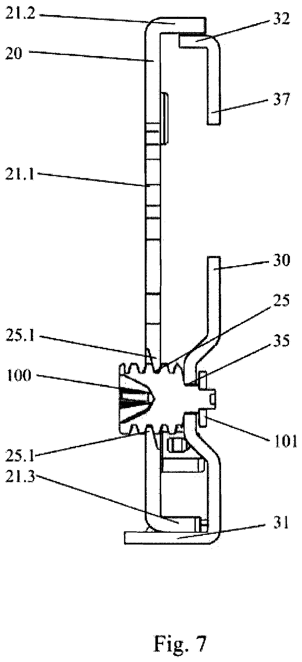

In den Montagebereich 21.1 ist eine Schneckenführung 25 in Form eines Durchbruchs angeordnet. An gegenüberliegenden Rändern der Schneckenführung 25 sind Prägestellen 25.1 angeformt. Wie insbesondere Figur 7 zu entnehmen ist bilden die Prägestellen 25.1 sich verjüngende Kantenbereiche aus, die entsprechend der Steigung einer eingeschraubten Schnecke 100 zueinander versetzt sind. Wie weiterhin insbesondere in Figur 7 dargestellt, ist die Schnecke 100 endseitig mit dem Aufnahmerahmen 30 verbunden.

Wie in Figur 3 gezeigt, ist in dem der Fangbolzenführung 26 abgewandten Bereich des Trägers 20 der Montagebereich 21.1 von einem Durchbruch 23 durchbrochen. Dem oberen Anlagebereich 21.2 zugewandt bildet der Durchbruch 23 eine erste Steuerkurve 92 aus. Die erste Steuerkurve 92 ist in etwa auf der Höhe der ersten Führungskurve 90 angeordnet. Sie verläuft gebogen. Dadurch bildet sie in ihrem mittleren Bereich eine Scheitelposition 92.1 und in ihren Endbereichen eine erste Endposition 92.2 und gegenüberliegend eine zweite Endposition 92.3 aus. Die Biegung der ersten Steuerkurve 92 verläuft, bezogen auf den Durchbruch 23, konvex. Die beiden Endpositionen 92.2, 92.3 sind somit von dem Durchbruch 23 weg gebogen, während die Scheitelposition 92.1 in dem Durchbruch 23 hinein geführt ist. Gegenüberliegend zu der ersten Steuerkurve 92 ist abschnittsweise eine Leitkurve 94 angeordnet. An dem der ersten Steuerkurve 92 gegenüberliegenden Abschluss des Durchbruchs 23 ist ein Federauflager 24.1 an den Montagebereich 21.1 angeformt. Das Federauflager 24.1 ist in einem Winkel zu dem Montagebereich 21.1 ausgerichtet. Vorzugsweise beträgt der Winkel zwischen dem Montagebereich 21.1 und dem Federauflager 24.1 zumindest in etwa 90°.

An den unteren Anlagebereich 21.3 ist eine Seiten-Rastnase 20.2 angeformt. Die Seiten-Rastnase 20.2 ist als längliche Kante ausgebildet, welche über die untere Oberfläche des unteren Anlagebereichs 21.3 übersteht. Bei montierter Befestigungseinrichtung ist die Seiten-Rastnase 20.2 somit in Richtung zum Rahmenboden 31 des Aufnahmerahmens 30 (siehe Figur 1) ausgerichtet.

Der Träger 20 ist in seine Montagebereich 21.1 weiterhin von einer Öffner-Achsaufnahme 29.2 durchbrochen. Die Öffner-Achsaufnahme 29.2 dient der schwenkbaren Befestigung eines Öffners 70. Figur 5 zeigt in einer Seitenansicht den Öffner 70. Er ist vorliegend als Blechstanzteil ausgebildet. Der Öffner 70 weist einen Achsdurchbruch 71 auf. Durch diesen und durch die fluchtend dazu angeordnete Öffner-Achsaufnahme 29.2 des Trägers 20 (siehe Figur 3) ist ein Öffner-Haltebolzen 74 geführt, wie dies insbesondere den Figuren 1 und 6 zu entnehmen ist. Der Öffner 70 ist somit schwenkbar mit dem Träger 20 verbunden. Dabei ist der Öffner 70 seitlich entlang dem Montagebereich 21.1 des Trägers 20 geführt. Wie Figur 5 weiter zu entnehmen ist, weist der Öffner 70 eine zweite Steuerkurve 93 auf. Diese ist durch einen in den Öffner 70 eingeformt Durchbruch gebildet. Die zweite Steuerkurve 93 ist gebogen ausgebildet. Dabei ist sie in ihrer Längserstreckung im Wesentlichen radial zum Achsdurchbruch 71 und damit zur Drehachse des Öffners 70 ausgerichtet. Der Öffner 70 weist einen Hebelabschnitt 72 auf. In den Hebelabschnitt 72 ist endseitig eine Werkzeugaufnahme 73 eingeformt. Die Biegung der zweiten Steuerkurve 93 erfolgt derart, dass ihre Enden von der Werkzeugaufnahme 73 weg gebogen sind.

Wie in Figur 1 gezeigt, ist dem Verschlusselement 3 ein Übertragungselement 60 zugeordnet. Das Übertragungselement 60 ist vorliegend als Blechstanzteil ausgebildet. Es weist eine längliche Form auf. Wie insbesondere in Figur 2 zu erkennen ist, sind in den gegenüberliegenden Endbereichen des Übertragungselements jeweils eine Bohrung 61, 62 eingeformt. Wie in Figur 1 gezeigt, stellt das Übertragungselement 60 eine mechanische Verbindung zwischen dem Öffner 70 und dem Verschluss 50 her. Dazu ist in der verschlussseitigen Bohrung 61 ein Lagerstück 63 und in der öffnerseitigen Bohrung 62 ein Lagerelement 64 gehalten. Das Lagerstück 63 ist, ausgehend von dem Übertragungselement 60, durch die erste Führungskurve 90 am Träger 20 und die zweite Führungskurve 91 am Verschluss geführt. Das Lagerelement 64 ist, ausgehend von dem Übertragungselement 60, durch die zweite Steuerkurve 93 am Öffner zu der ersten Steuerkurve 92 und der Leitkurve 94 am Träger 20 geführt. Das Lagerstück 64 kann somit entlang der ersten Führungskurve 90 und der zweiten Führungskurve 91 verstellt werden. Das Lagerelement 64 kann entlang der ersten Steuerkurve 92 und der Leitkurve 94 sowie der zweiten Steuerkurve 93 verstellt werden.

Wie Figur 1 weiter zu entnehmen ist, ist an dem Federauflager 24.1 eine Feder 44 gehalten. Die Feder 44 ist als Druckfeder ausgebildet. Sie ist durch einen innerhalb der Feder 44 verlaufenden Federdorn 41 seitlich geführt.

Figur 2 zeigt die in Figur 1 gezeigte Befestigungseinrichtung 1 in einer Explosionsdarstellung. Der Öffner 70 ist seitlich des Trägers 20 angeordnet. Bei der Montage der Befestigungseinrichtung 1 wird der Öffner 70 mit Hilfe des Öffner-Haltebolzens 74 in der Öffner-Achsaufnahme 29.2 schwenkbar festgelegt. Dem Öffner-Haltebolzen 74 ist dazu eine der gezeigten Lochscheiben 101 zugeordnet, mit welcher der Öffner-Haltebolzen 74 endseitig vernietet wird. Das Lagerelement 64 wird durch den Durchbruch 23 und die zweite Steuerkurve 93 zu der öffnerseitigen Bohrung 62 des Übertragungselements 60 geführt und mit diesem verbunden. Das Lagerelement 64 ist somit durch die erste Steuerkurve 92 und abschnittsweise die Leitkurve 94 am Träger 20 und durch die zweite Steuerkurve 93 am Öffner 70 geführt. Somit ist auch das Übertragungselement 60 durch die erste Steuerkurve 92, die Leitkurve 94 und die zweite Steuerkurve 93 geführt. Die Feder ist einem Federhalter 40 zugeordnet. Der Federhalter 40 weist einen Kopfbereich 45 auf, an den ein Federanschlag 43 angeformt ist. An den Federanschlag 43 schließt der Federdorn 41 an. Gegenüberliegend zu dem Federdorn 41 ist ein Anlegebereich 42 in Form eines U-förmigen, einseitig geöffneten Durchbruchs in den Kopfbereich 45 eingebracht. Der Anlegebereich 42 ist dabei in die dem Federdorn 41 gegenüberliegende Richtung geöffnet. Zur Montage wird die Feder 44 auf den Federdorn 41 aufgesteckt. Der Federdorn 41 wird anschließend mit seinem dem Kopfbereich 45 abgewandten Ende durch eine Federdorn-Durchführung 24.2 in der Federauflage 24.1 geführt. Die Feder 44 ist so zwischen dem Federanschlag 43 am Federhalter 40 und der Federauflage 24.1 am Träger 20 gehalten. Der Federhalter 40 ist mit seinem Anlegebereich 42 an dem Lagerelement 64 angelegt. Dazu umgreift der Anlegebereich 42 einen Abschnitt eines zylinderförmigen Führungsbereichs 64.1 des Lageelements 64, mit dem dieses auch an der ersten Steuerkurve 92 und der zweiten Steuerkurve 93 anliegt. Die Feder 44 ist als Druckfeder ausgebildet. Sie überträgt somit über den Federhalter 40 eine Kraft auf das Lagerelement 64, wodurch dieses gegen die erste Steuerkurve 92 gedrückt wird. Dabei wird das Lagerelement 64 in die erste oder die zweite Endposition 92.2, 92.3 der ersten Steuerkurve 92 gedrückt, je nachdem, auf welcher Seite der Scheitelposition 92.1 der Steuerkurve 92 das Lagerelement 64 gerade angeordnet ist. Das mit dem Lagerelement 64 verbundene Übertragungselement 60 wird so durch die Federkraft in eine der beiden durch die erste Steuerkurve 92 vorgegebenen, stabilen Endpositionen 92.2, 92.3 verstellt.

Der Verschluss 50 ist in seine geöffnete Stellung ausgerichtet zwischen dem Träger 20 und dem Aufnahmerahmen 30 angeordnet. Er wird mit einem Verschluss-Haltebolzen 52 schwenkbar mit dem Träger 20 verbunden. Dazu ist der Verschluss-Haltebolzen 52 bei montierter Befestigungseinrichtung 1 durch die Verschluss-Bolzenaufnahme 51 des Verschlusses 50 und die Verschluss-Achsaufnahme 29.1 des Trägers 20 geführt und axial festgelegt. Das Lagerstück 63 wird bei der Montage der Befestigungseinrichtung 1 durch die verschlussseitige Bohrung 61 des Übertragungselement 60, den die erste Führungskurve 90 ausbildenden Durchbruch am Träger 20 und die zweite Führungskurve 91 am Verschluss 50 geführt. Axial wird das Lagerstück 63 endseitig durch eine Verbindung zu einer Lochscheibe 101 gehalten.

Die Höhenverstelleinheit 80 ist seitlich beabstandet zu dem Träger 20 und gegenüberliegend zu dem Aufnahmerahmen 30 angeordnet. Sie wird zur Montage der Befestigungseinrichtung 1 derart flächig an den Montagebereich 21.1 des Trägers 20 angelegt, dass ihr Führungszapfen 83 in der Führungszapfen-Aufnahme 27 des Trägers 20 angeordnet ist. Der Bolzen 84 wird durch das Langloch 82 der Höhenverstelleinheit 80 und die Bohrung 21.4 geführt und endseitig an einer Lochscheibe 101 festgelegt. Der Exzenter 85 wird durch eine Exzenterführung 86 der Höhenverstelleinheit 80 geführt und mit einer exzentrisch angeordneten Exzenternocke 85.1 in der Exzenteraufnahme 28 am Träger 20 geführt. Durch Betätigung des Exzenters 85 kann so die Höhenverstelleinheit 80, wie zuvor beschrieben, in ihrer Höhe verstellt werden.

Der Aufnahmerahmen 30 ist so ausgerichtet, dass seine Rahmendeckel 32 und seine Rahmenboden 31 zum Träger 20 hin weisen. Beim Zusammenbau der Befestigungseinrichtung 1 wird der Rahmendeckel 32 derart unter den oberen Anlagebereich 21.2 des Trägers 20 geschoben, dass der mit dem Rahmendeckel 32 verbundene Lagerzapfen 33 in eine Lagerzapfen-Aufnahme 22.1, welche in den Anlagebereich 21.2 eingeformt ist, eingeführt ist. Gegenüberliegend umgreift der Aufnahmerahmen 30 mit seinem Rahmenboden 31 bei der Montage den unteren Anlagebereich 21.3 derart, dass eine in den Rahmenboden 31 eingebrachten Nietdurchführung 34 fluchtend zu einer den unteren Anlagebereich 21.3 durchbrechenden Nietaufnahme 22.2 angeordnet ist. Der Rahmenboden 31 und der unterer Anlagebereich 21.2 werden anschließend mit einer nicht gezeigten Niete um die Längsachse der Niete schwenkbar miteinander verbunden. Der Lagerzapfen 33 und die nicht gezeigten Niete bildeten so die bereits beschriebene Schwenkachse aus, um die der Träger 20 gegenüber dem Aufnahmerahmen 30 geschwenkt werden kann. Der Lagerzapfen 33 ist konisch ausgeführt. Dadurch kann der Träger 20 spielfrei gegenüber dem Aufnahmerahmen 30 positioniert werden. An dem Rahmenboden 31 sind Seiten-Rastnuten 36 eingeformt. Bei montierter Befestigungseinrichtung 1 greift die Seiten-Rastnase 20.2 des Trägers 20 in die Seiten-Rastnuten 36 ein. Dies bewirkt, dass der Träger 20 in durch die Seiten-Rastnuten 36 vorgegebenen Rastschritten gegenüber dem Aufnahmerahmen 30 geschwenkt werden kann. Vorliegend sind die Seiten-Rastnuten 36 derart gewählt, dass die Winkeleinstellung in 1° Schritten ermöglicht wird.

Aus der in Figur 2 gewählten Perspektive ist der zweite Führungsabschnitt 12.2 zu erkennen, welche gegenüberliegend zu dem in Figur 1 gezeigten ersten Führungsabschnitt 12.1 an den Blendenhalter 10 angeformt ist. Die beiden Führungsabschnitte 12.1, 12.2 sind beabstandet zueinander angeordnet, sodass sie beim Zusammenführen des Halteelements 2 und des Verschlusselements 3 den Träger 20 und den daran montierten Verschluss 50 im Bereich der Fangbolzenführung 26 und der Klauenausnehmung 54 umgreifen. Der Fangbolzen 13 wird zur Montage des Halteelements 2 durch die Fangbolzenaufnahme 14 der gegenüberliegend angeordneten Führungsabschnitte 12 geschoben und endseitig durch eine Lochscheibe 101 axial gehalten. Dabei wird der Fangbolzen 13 in Abhängigkeit von der Positionierung der Höhenverstelleinheit 80 an dem Träger 20 derart innerhalb der als Langloch ausgeführten Fangbolzenaufnahme 14 positioniert, dass er exakt gegenüber der Fangbolzenführung 26 des Trägers 20 ausgerichtet ist. Beim Verbinden des Halteelements 2 mit dem Verschlusselement 3 wird der Fangbolzen 13 mit seinem zwischen den beiden Führungsabschnitten 12.1, 12.2 angeordneten Bereich in die Klauenausnehmung 54 und die Fangbolzenführung 26 eingeschoben.

Figur 7 zeigt in einer Vorderansicht den Träger 20 und den Aufnahmerahmen 30 der Befestigungseinrichtung 1 in einem teilmontierten Fertigungszustand. Der Träger 20 liegt mit seinem oberen Anlagebereich 21.2 an dem Rahmendeckel 32 und mit seinem unteren Anlagebereich 21.3 an dem Rahmenboden 31 des Aufnahmerahmens 30 an. Wie bereits beschrieben, ist der Träger 20 schwenkbar gegenüber dem Aufnahmerahmen 30 gelagert. Die Schnecke 100 ist in die Schneckenführung 25 am Träger 20 eingeschraubt. Dazu greift das Gewinde der Schnecke 100 in die gegenüberliegend an der Schneckenführung 25 angeordneten Prägestellen 25.1 ein. Die gegenüberliegenden Prägestellen 25.1 sind entsprechend der Steigung des Gewindes der Schnecke 100 zueinander versetzt. Die Schnecke 100 kann so in einem rechten Winkel ausgerichtet gegenüber dem Montagebereich 21.1 des Trägers 20 in die Schneckenführung 25 eingeschraubt werden. Endseitig ist die Schnecke 100 in einem Schneckenlager 35, welches als Durchbruch in dem Aufnahmerahmen 30 ausgebildet ist, gelagert und axial durch eine Lochscheibe 101 festgelegt. Durch Drehen der Schnecke 100 kann der Träger 20 gegenüber dem Aufnahmerahmen 30 geschwenkt werden. Dies ermöglicht in der Anwendung eine Seiteneinstellung der an der Schublade montierten Frontblende.

Zur Befestigung einer Frontblende an einer Schublade wird zunächst das Halteelement 2 mit entsprechenden Befestigungselementen 11, wie sie exemplarisch in Figur 1 gezeigt sind, an der Innenseite der Frontblende befestigt. Das Verschlusselement 3 wird mit dem Rahmenboden 31 an einer Zarge der Schublade befestigt. Die Höhenverstelleinheit 80 wird durch Betätigung des Exzenters 85 derart eingestellt, dass die Höhe der Frontblende exakt gegenüber der Schublade ausgerichtet ist. Dazu wird auch der Fangbolzen 13 in der Fangbolzenaufnahme 14 so positioniert, dass er exakt gegenüber der Fangbolzenführung 26 ausgerichtet ist. Mit Hilfe der Schnecke 100 wird die Frontblende in seitlicher Richtung gegenüber der Schublade ausgerichtet. Ausgehend von der in Figur 1 gezeigten geöffneten Position des Verschlusses 50 wird das Halteelement 2 mit seinem ersten Führungsabschnitt 12.1 in den Aufnahmebereich 81 der Höhenverstelleinheit 80 eingeschoben. Dabei wird der Fangbolzen 13 gegen die hinteren Klauenbacke 56.2 des Verschlusses 50 gedrückt. Durch diese Krafteinwirkung wird der Verschluss 50 um seine Drehachse gedreht, bis die in Figur 6 gezeigte geschlossene Position der Befestigungseinrichtung 1 erreicht ist. In dieser geschlossenen Position ist der Fangbolzen 13 in der Fangbolzenführung 26 und der quer dazu ausgerichteten Klauenausnehmung 54 gehalten. Die Klaue 53 mit der Klauenausnehmung 54 bildet somit einen Halteabschnitt des Verschlusses 50 und der Fangbolzen 13 einen Haltebereich des Halteelements 2, der von dem Halteabschnitt in Abhängigkeit von der Stellung des Verschlusses blockiert oder freigegeben wird. Durch die Schwenkbewegung des Verschlusses 50 wird das in der zweiten Führungskurve 91 an dem Verschluss 50 angekoppelte Lagerstück 63 mit verstellt. Dadurch wird auch das mit dem Lagerstück 63 verbundene Übertragungselement 60 verschoben. Durch die Verstellung des Übertragungselements 60 wird das Lagerelement 64 beim Schließen des Verschlusses 50 entlang der ersten Steuerkurve 92, wie sie in Figur 3 gezeigt ist, von der zweiten Endposition 92.3 in die erste Endposition 92.2 verschoben. Dabei wirkt die von der Feder 44 auf das Lagerelement 64 übertragene Federkraft bis zur Überschreitung der Scheitelposition 92.1 der ersten Steuerkurve 92 der Schließbewegung entgegen. Nach Überschreitung der Scheitelposition 92.1 wirkt die auf das Lagerelement 64 übertragene Federkraft in Richtung der ersten Endposition 92.2 und damit in Schließrichtung des Verschlusses 50. Auf seinem letzten Stellabschnitt wird der Verschluss 50 somit selbsttätig von der Feder 44 in seine geschlossene Position verstellt. Dadurch wird der Fangbolzen 13 und damit das Halteelement 2 in seine in Figur 6 gezeigte Schließposition gezogen. Beim Schließen des Verschlusses 50 wird auch der Öffner 70 durch das in der zweiten Steuerkurve 93 geführte Lagerelement 64 um seine Drehachse geschwenkt.

Um die Frontblende wieder von der Schublade zu lösen wird ein geeignetes Werkzeug, vorliegend ein Kreuzschlitz-Schraubendreher, in die Werkzeugaufnahme 73 des Öffners 70 eingesetzt. Der Öffner wird dann mit Hilfe des Werkzeugs von seiner in Figur 6 gezeigten geschlossenen Position in seine in Figur 1 gezeigte geöffnete Position gedreht. Dabei wird das Übertragungselement 60 aufgrund des Eingriffes des Lagerelements 64 in die zweite Steuerkurve 93 von seiner in Figur 6 gezeigten geschlossenen Position in seine in Figur 1 gezeigte geöffnete Position verstellt. Die Krafteinwirkung des Werkzeugs wirkt der Federkraft entgegen. Dadurch wird während des Werkzeugeinsatzes das Lagerelement 64 nicht gegen die erste Steuerkurve 92 gedrückt. Die Führung des Lagerelements 64 erfolgt jetzt durch die Leitkurve 94. Diese ist beabstandet zu der ersten Steuerkurve 92 angeordnet und kreuzt damit ebenfalls die zweite Steuerkurve 93. Die auf das Lagerelement 64 einwirkende Federkraft wirkt der Öffnungsbewegung zunächst entgegen, bis das Lagerelement 64 die Scheitelposition 92.1 der ersten Steuerkurve 92 passiert hat. Nach Überschreitung der Scheitelposition 92.1 und Absetzen des Werkzeugs drückt die Feder 44 das Lagerelement 64 entlang der ersten Steuerkurve 92 in Richtung der zweiten Endposition 92.3. Die Feder 44 unterstützt somit die Öffnungsbewegung auf ihrem letzten Stellabschnitt. Das Lagerstück 63 überträgt die Öffnungsbewegung auf den Verschluss 50. Dieser wird somit von seiner in Figur 6 gezeigten Schließposition in seine in Figur 1 gezeigte geöffnete Position verstellt. Dadurch gibt die Klaue 53 des Verschlusses 50 den Fangbolzen 13 frei und das Halteelement 2 kann mit der daran befestigten Frontblende entnommen werden.

Der Bewegungsablauf des Verschlusses 50, des Übertragungselements 60 und des Öffners 70 ist durch die beiden Führungskurven 90, 91 und die beiden Steuerkurven 92, 93 vorgegeben. Für die nachfolgende Beschreibung entspricht die Schließrichtung die Bewegung der jeweils beschriebenen Komponente beim Schließen des Verschlusses 50. Entsprechend entspricht die Öffnungsrichtung der Bewegung der jeweiligen Komponente beim Öffnen des Verschlusses 50.

Die Führungskurven 90, 91 bilden zusammen mit dem Lagerstück 63 eine verschlussseitige Dreh-/Schiebeverbindung zwischen dem Übertragungselement 60 und dem Verschluss 50. Die Führungskurven 90, 91 sind derart ausgerichtet, dass sie sich kreuzen. Das Lagerstücke 63 ist in allen Stellpositionen des Verschlusses 50 in dem Kreuzungspunkt der beiden Führungskurven 90, 91 angeordnet. Die erste Führungskurve 90 ist über einen Winkelabschnitt in einem Bogen um den Drehpunkt des Verschlusses 50 geführt. Dabei verringert sich der Abstand zwischen der ersten Führungskurve 90 und dem Drehpunkt in Schließrichtung. Das Lagerstück 63 wird somit beim Schließen des Verschlusses 60 durch die erste Führungskurve 90 näher an den Drehpunkt des Verschlusses 60 herangeführt. In seiner geschlossenen Stellung ist der Verschluss 50 entlang seiner Längserstreckung zwischen dem oberen Anlagebereich 21.2 und dem unteren Anlagebereich 21.3 des Trägers 20 ausgerichtet. Die Längserstreckung des Verschlusses 60 verläuft somit zumindest annähernd parallel zu der Montagefläche 10.1 des Blendenhalters 10. Durch den reduzierten Abstand zwischen dem Lagerstück 63 und dem Drehpunkt des Verschlusses 50 wird erreicht, dass das Übertragungselement 60 während der Schließbewegung nicht oder nur wenig in Richtung zu dem oberen Anlagebereich 21.2 verstellt wird. Dadurch kann die Gesamtbauhöhe des Verschlusselements 3 gering gehalten werden. Durch den geringeren Abstand zwischen der verschlussseitigen Dreh-/Schiebeverbindung und dem Drehpunkt des Verschlusses 50 wird, bezogen auf eine jeweilige Verstellung des Übertragungselement 60, am Ende der Schließbewegung oder am Anfang der Öffnungsbewegung eine große Winkelverstellung des Verschlusses 50 erreicht. Dadurch wird der erforderliche Stellweg des Übertragungselements 60 zum Schließen und zum Öffnen des Verschlusses 50 verringert. Dies ermöglicht einen kompakten Aufbau der Befestigungseinrichtung 1. Die im Wesentlichen radiale Ausrichtung der zweiten Führungskurve 91 am Verschluss 50 ermöglicht die Veränderung des Radius, mit dem die verschlussseitige Dreh-/Schiebeverbindung um den Drehpunkt des Verschlusses 50 geführt ist. Die zweite Führungskurve 91 ist dabei, bezogen auf den Drehpunkt des Verschlusses 50, mit steigendem Radius von dem Übertragungselement 60 weg gebogen. Beim Schließen des Verschlusses 50 wird die verschlussseitige Dreh-/Schiebeverbindung durch die erste Führungskurve 90 auf einen kleineren Radius zu der Drehachse des Verschlusses 50 gezwungen. Die zweite Führungskurve 91 ist bei diesem kleineren Radius in Richtung auf das Übertragungselement 60 zu geführt. Dies bewirkt bei einer gegebenen Verstellung des Übertragungselements 60 am Ende seiner Schließbewegung eine vergrößerte Winkelverstellung des Verschlusses 50. Es ist somit nur eine vergleichsweise geringe Verstellung des Übertragungselements 60 erforderlich, um eine vergleichsweise große Drehung des Verschlusses 50 zu ermöglichen. Dies führt zu einer weiteren Reduzierung der erforderlichen Abmessungen des Verschlusselements 3. Durch die Führung der verschlussseitigen Dreh-/Schiebeverbindung entlang der sich kreuzenden Führungskurven 90, 91 wird somit bei geringer Bauhöhe und reduzierten Stellwegen eine ausreichend große Drehung des Verschlusses 50 zur Freigabe und zur Festlegung des Halteelements 2 ermöglicht.

Die Steuerkurven 92, 93 bilden zusammen mit dem Lagerelement 64 eine öffnerseitige Dreh-/Schiebeverbindung zwischen dem Übertragungselement 60 und dem Öffner 70. Die Steuerkurven 92, 93 sind derart ausgerichtet, dass sie sich kreuzen. Das Lagerelement 64 ist in allen Stellpositionen des Verschlusses 50 in dem Kreuzungspunkt der beiden Steuerkurven 92, 93 angeordnet. Die Feder 44 übt eine Kraft auf das Lagerelement 64 aus. Die erste Steuerkurve 92 ist gewölbt ausgebildet. Dabei sind die beiden 32 Endpositionen 92.2, 92.3 der ersten Steuerkurve 92 in Richtung der Krafteinwirkung durch die Feder 44 gebogen. Eine zwischen den beiden Endpositionen 92.2, 92.3 angeordnete Scheitelposition 92.1 ist entgegen der Richtung der einwirkenden Federkraft gewölbt. Die erste Steuerkurve 92 ist somit entgegen der einwirkenden Federkraft gewölbt ausgebildet. Bei geöffnetem Verschluss 50 drückt die Feder 44 das Lagerelement 64 in die zweite Endposition 92.3 der ersten Steuerkurve 92. Bei geschlossenem Verschluss 50 drückt die Feder 44 das Lagerelement 64 in die erste Endposition 92.2 der ersten Steuerkurve 92. Die erste Steuerkurve 92 definiert somit zwei stabile Stellungen des Übertragungselements 60 und somit des Verschlusses 50. Bei geschlossenem Verschluss 50, wie er in Figur 6 gezeigt ist, wird durch Ziehen an der nicht gezeigten, mit dem Halteelement 2 verbundenen Frontblende eine Kraft auf den Verschluss 50 übertragen. Diese Kraft wirkt in Öffnungsrichtung des Verschlusses 50. Sie wird über das Übertragungselement 60 zu der öffnerseitigen Dreh-/Schiebeverbindung übertragen. Die erste Steuerkurve 92 ist im Bereich ihrer ersten Endposition 92.2 quer zur Krafteinwirkung, wie sie durch Ziehen an der Frontblende auf die öffnerseitige Dreh-/Schiebeverbindung übertragen wird, ausgerichtet. Dabei ist die Neigung der ersten Steuerkurve 92 im Bereich ihrer ersten Endposition 92.2 gegenüber der Richtung der Krafteinwirkung durch Ziehen an der Frontblende derart gewählt, dass das Lagerelement 64 selbsthemmend in der ersten Endposition 92.2 gehalten ist. Auch durch starkes Ziehen an der Frontblende kann somit der Verschluss 50 nicht unbeabsichtigt geöffnet werden. Durch Drehen des Öffners 70 in Öffnungsrichtung um seine Drehachse wird über die zweite Steuerkurve 93 eine Kraft auf das Lagerelement 64 übertragen, welche in Richtung der Ausrichtung der ersten Steuerkurve 92 im Bereich ihrer ersten Endposition 92.2 wirkt. Damit liegt für diese Krafteinwirkung keine Selbsthemmung vor. Zum Drehen des Öffners 70 muss daher lediglich die Rückstellkraft der Feder 44 überwunden werden, um das Lagerelement 64 aus der ersten Endposition 92.2 zur Scheitelposition 92.1 der ersten Steuerkurve 92 zu bewegen. Ab der Scheitelposition 92.1 unterstützt die Feder 44 die Öffnungsbewegung und das Lagerelement 64 wird in die zweite Endposition 92.3 der ersten Steuerkurve 92 verstellt.

Zum Schließen der Befestigungseinrichtung 1 wird, ausgehend von der in Figur 1 gezeigten geöffneten Position des Verschlusses 50, das Halteelement 2 mit seinem Fangbolzen 13 gegen die hintere Klauenbacke 56.2 der Klaue 53 des Verschlusses 50 gedrückt. Dadurch wird der Verschluss 50 in Schließrichtung gedreht. Die Drehbewegung wird auf das Übertragungselement 60 und von diesem auf die öffnerseitige Dreh-/Schiebeverbindung übertragen. Bei ausreichend großer, auf den Verschluss 50 einwirkender Schließkraft wird das Lagerelement 64 entgegen der einwirkenden Federkraft aus der zweiten Endposition 92.3 der ersten Steuerkurve 92 in Richtung zur ersten Endposition 92.2 verstellt. Nach Überschreiten der Scheitelposition 92.1 unterstützt die von der Feder 44 übertragene Federkraft die Schließbewegung.

Um sowohl beim Öffnen als auch beim Schließen des Verschlusses die Bewegung des Lagerelements 64 entlang der ersten Steuerkurve 92 zu ermöglichen, ist die zweite Steuerkurve 93 am Öffner 70 im Wesentlichen radial zur Drehachse des Öffners 70 ausgerichtet. Das Lagerelement 64 ist, bezogen auf die Drehachse des Öffners 70, entlang der zweiten Steuerkurve 93 bei geöffnetem Verschluss 50 auf einem kleineren und bei geschlossenem Verschluss auf einem größeren Radius der zweiten Steuerkurve 93 angeordnet. Die zweite Steuerkurve 93 ist im Bereich ihres geringeren Abstandes zu der Drehachse des Öffners 70 entgegengesetzt zur Drehrichtung des Öffners 70 beim Öffnen des Verschlusses 50 gebogen. Durch diese Biegung wird bei einer geringen Verstellung des Öffners 70 eine vergleichsweise große Verstellung des Übertragungselements 60 und damit des Verschlusses 50 erreicht. Es ist entsprechend nur ein geringer Bauraum vorzusehen, indem der Öffner 70 verstellt werden muss. Auch diese Maßnahme führt somit zu einem kompakten Aufbau der Befestigungseinrichtung 1.

Durch die beschriebene, sich kreuzenden Anordnung der Führungskurven 90, 91 bzw. der Steuerkurven 92, 93 wird bei geringem Platzbedarf und bei geringem Stellweg bzw. Schwenkweg des Öffners 70 ein großer Schwenkwinkel des Verschlusses 50 ermöglicht. Dabei wird durch die Ausbildung der ersten Steuerkurve 92 eine Selbsthemmung des Verschlusses 50 sichergestellt. Durch die dargelegte Höhenverstellung und Seitenverstellung kann eine montierte Frontblende exakt gegenüber einer Schublade ausgerichtet werden.

## Patentansprüche

1. Befestigungseinrichtung (1) zur Befestigung einer Frontblende einer Schublade an einer Schubladenzarge, mit einem an der Frontblende befestigbaren Halteelement (2) und einem an der Schubladenzarge befestigbaren Verschlusselement (3),
wobei das Verschlusselement (3) einen Träger (20) und einen um eine Drehachse drehbar an dem Träger (20) gelagerten Verschluss (50) mit einem Halteabschnitt aufweist,
wobei eine Feder (44) mit dem Verschluss (50) in Wirkverbindung steht und wobei der Verschluss (50) dazu ausgebildet ist, in einer geöffneten Drehposition des Verschlusses (50) einen Haltebereich des Halteelements (2) freizugeben und in einer Schließposition des Verschlusses (50) den Haltebereich zu blockieren,
wobei ein Übertragungselement (60) über eine verschlussseitige Dreh-/Schiebeverbindung beabstandet zu der Drehachse des Verschlusses (50) an diesem angelenkt ist,
wobei an dem Übertragungselement (60) gegenüberliegend zu der verschlussseitigen Dreh-/Schiebeverbindung eine öffnerseitige Dreh-/Schiebeverbindung mit einem Lagerelement (64) angeordnet ist,
wobei die öffnerseitige Dreh-/Schiebeverbindung eine Verbindung zu einem beweglich gelagerten Öffner (70) herstellt,
wobei die öffnerseitige Dreh-/Schiebeverbindung eine erste und eine zweite Steuerkurve (92, 93) aufweist, an denen das Lagerelement (64) geführt ist, und dass sich die beiden Steuerkurven (92, 93) kreuzen,
**dadurch gekennzeichnet,**
**dass** das Lagerelement (64) entlang der zweiten Steuerkurve (93) bei geschlossenem Verschluss (50) auf einem größeren und bei geöffnetem Verschluss (50) auf einem kleineren Radius, bezogen auf den Drehpunkt des Öffners (70), angeordnet ist.

2. Befestigungseinrichtung (1) nach Anspruch 1,
**dadurch gekennzeichnet,**
**dass** die erste Steuerkurve (92) an dem Träger (20) angeordnet ist und/oder dass die zweite Steuerkurve (93) an dem Öffner (70) angeordnet ist.

3. Befestigungseinrichtung (1) nach Anspruch 1 oder 2,
**dadurch gekennzeichnet,**
**dass** zumindest eine der Steuerkurven (90, 91) gebogen verläuft.

4. Befestigungseinrichtung (1) nach einem der Ansprüche 1 bis 3,
**dadurch gekennzeichnet,**
**dass** das Lagerelement (64) mit dem Übertragungselement (60) verbunden ist.

5. Befestigungseinrichtung (1) nach einem der Ansprüche 1 bis 4,
**dadurch gekennzeichnet,**
**dass** die Feder (44) quer zur Ausrichtung der ersten Steuerkurve (92) auf das Lagerelement (64) wirkt und dass die Feder (44) das Lagerelement (64) bei geschlossenem Verschluss (50) in eine erste Endposition (92.2) und bei geöffnetem Verschluss (50) in eine gegenüberliegende zweite Endposition (92.3) der ersten Steuerkurve (92) drückt oder zieht.

6. Befestigungseinrichtung (1) nach einem der Ansprüche 1 bis 5,
**dadurch gekennzeichnet,**
**dass** erste Steuerkurve (92) entgegen der einwirkenden Federkraft gewölbt ist.

7. Befestigungseinrichtung (1) nach Anspruch einem der Ansprüche 1 bis 6,
**dadurch gekennzeichnet,**
**dass** durch eine Drehbewegung des Öffners (70) das Lagerelement (64) aus der ersten Endposition (92.2) der ersten Steuerkurve (92) in die zweite Endposition (92.3) der ersten Steuerkurve (92) verstellbar ist.

8. Befestigungseinrichtung (1) nach einem der Ansprüche 1 bis 7,
**dadurch gekennzeichnet,**
**dass** die zweite Steuerkurve (93) in ihrem auf einem kleineren Radius um den Drehpunkt des Öffners (70) liegenden Endbereich entgegengesetzt zur Drehrichtung des Öffners (70) beim Öffnen des Verschlusses (50) gebogen ist

9. Befestigungseinrichtung (1) nach einem der Ansprüche 1 bis 8,
**dadurch gekennzeichnet,**
**dass** die erste Steuerkurve (92) im Bereich ihrer ersten Endposition (92.2) derart quer zur Krafteinwirkung des Übertragungselements (60) ausgerichtet ist, dass das Lagerelement (64) bei geschlossenem Verschluss (50) selbsthemmend in der ersten Endposition (92.2) gehalten ist.

10. Befestigungseinrichtung (1) nach einem der Ansprüche 1 bis 9
**dadurch gekennzeichnet,**
**dass** das Übertragungselement (60) über eine verschlussseitige Dreh-/Schiebeverbindung beabstandet zu der Drehachse des Verschlusses (50) an diesem angelenkt ist,
**dass** die verschlussseitige Dreh-/Schiebeverbindung eine erste und eine zweite Führungskurve (90, 91) aufweist,
und **dass** sich die beiden Führungskurven (90, 91) kreuzen.

## Claims

1. A securing device (1) for securing a front panel of a drawer to a drawer frame, having a holding element (2) for securing to the front panel and a closing element (3) for securing to the drawer frame,
the closing element (3) comprising a support (20) and a closure (50) having a holding segment supported rotatably about an axis of rotation on the support (20),
a spring (44) having an operative connection to the closure (50), and
the closure (50) being implemented for exposing a holding region of the holding element (2) in an open rotational position of the closure (50), and for blocking the holding region in a closed position of the closure (50),
wherein a transmission element (60) is hinged to the closure by means of a rotating/sliding connection on the closure side spaced apart from the axis of rotation of the closure (50),
wherein a rotating/sliding connection on the opener side having a bearing element (64) is disposed on the transmission element (60) opposite the rotating/sliding connection on the closure side,
wherein the rotating/sliding connection on the opener side produces a connection to a displaceably supported opener (70),
wherein the rotating/sliding connection on the opener side comprises a first and a second control curve (92, 93) on which the bearing element (64) is guided, and wherein the two control curves (92, 93) intersect,
**characterized in that**
the bearing element (64) is disposed along the second control curve (93) at a greater radius when the closure (50) is closed and at a lesser radius when the closure is open (50), relative to the center of rotation of the opener (70).

2. The securing device (1) according to claim 1,
**characterized in that**
the first control curve (92) is disposed on the support (20) and/or
that the second control curve (93) is disposed on the opener (70).

3. The securing device (1) according to claim 1 or 2,
**characterized in that**
at least one of the control curves (90, 91) runs on a curved path.

4. The securing device (1) according to any one of the claims 1 through 3,
**characterized in that**
the bearing element (64) is connected to the transmission element (60).

5. The securing device (1) according to any one of the claims 1 through 4,
**characterized in that**
the spring (44) acts on the bearing element (64) transverse to the alignment of the first control curve (92) and that the spring (44) pushes or pulls the bearing element (64) into a first end position (92.2) when the closure (50) is closed and into an opposite second end position (92.3) of the first control curve (92) when the closure (50) is opened.

6. The securing device (1) according to any one of the claims 1 through 5,
**characterized in that**
the first control curve (92) is curved opposite the acting spring force.

7. The securing device (1) according to any one of the claims 1 through 6,
**characterized in that**
the bearing element (64) can be displaced out of the first end position (92.2) of the first control curve (92) into the second end position (92.3) of the first control curve (92) by means of a rotary motion of the opener (70).

8. The securing device (1) according to any one of the claims 1 through 7,
**characterized in that**
the second control curve (93) is curved in the end region thereof lying at a lesser radius about the center of rotation of the opener (70), opposite to the direction of rotation of the opener (70) when opening the closure (50).

9. The securing device (1) according to any one of the claims 1 through 8,
**characterized in that**
the first control curve (92) is aligned transverse to the acting force of the transmission element (60) in the region of the first end position (92.2) thereof, and that the bearing element (64) is held in the first end position (92.2) in a self-blocking manner when the closure (50) is closed.

10. The securing device (1) according to any one of the claims 1 through 9,
**characterized in that**
the transmission element (60) is hinged to the closure by means of a rotating/sliding connection on the closure side spaced apart from the axis of rotation of the closure (50),
that the rotating/sliding connection on the closure side comprises a first and a second guide curve (90, 91),
and that the two guide curves (90, 91) intersect.

## Revendications

1. Dispositif de fixation (1) pour la fixation d'un panneau frontal d'un tiroir sur un châssis de tiroir, avec un élément de retenue (2) pouvant être fixé sur le panneau frontal et un élément de fermeture (3) pouvant être fixé sur le châssis de tiroir, l'élément de fermeture (3) présentant un support (20) et une fermeture (50) logée sur le support (20) de manière à pouvoir tourner autour d'un axe de rotation avec une section de retenue,
un ressort (44) étant en liaison active avec la fermeture (50) et la fermeture (50) étant conçue pour libérer une zone de retenue de l'élément de retenue (2) dans une position de rotation ouverte de la fermeture (50) et pour bloquer la zone de retenue dans une position de fermeture de la fermeture (50),
un élément de transmission (60) étant articulé sur la fermeture (50) par l'intermédiaire d'une liaison pivotante/coulissante côté fermeture, à distance de l'axe de rotation de la fermeture (50),
une liaison pivotante/coulissante côté ouvreur avec un élément de palier (64) étant disposée sur l'élément de transmission (60) à l'opposé de la liaison pivotante/coulissante côté fermeture,
la liaison pivotante/coulissante côté ouvreur établissant une liaison avec un ouvreur (70) monté mobile,
la liaison pivotante/coulissante côté ouvreur présentant une première et une deuxième came de commande (92, 93), sur lesquelles l'élément de palier (64) est guidé, et en ce que les deux cames de commande (92, 93) se croisent, **caractérisé**
**en ce que** l'élément de palier (64) est disposé le long de la deuxième came de commande (93) sur un rayon plus grand lorsque la fermeture (50) est fermée et sur un rayon plus petit lorsque la fermeture (50) est ouverte, par rapport au point de rotation de l'ouvreur (70).

2. Dispositif de fixation (1) selon la revendication 1, **caractérisé en ce que** la première came de commande (92) est disposée sur le support (20) et/ou **en ce que** la deuxième came de commande (93) est disposée sur l'ouvreur (70).

3. Dispositif de fixation (1) selon la revendication 1 ou 2, **caractérisé en ce qu'**au moins l'une des cames de commande (90, 91) est incurvée.

4. Dispositif de fixation (1) selon l'une des revendications 1 à 3, **caractérisé en ce que** l'élément de palier (64) est relié à l'élément de transmission (60).

5. Dispositif de fixation (1) selon l'une des revendications 1 à 4, **caractérisé en ce que** le ressort (44) agit sur l'élément de palier (64) transversalement à l'orientation de la première came de commande (92) et **en ce que** le ressort (44) pousse ou tire l'élément de palier (64) vers une première position d'extrémité (92.2) de la première came de commande (92) lorsque la fermeture (50) est fermée et vers une deuxième position d'extrémité (92.3) opposée lorsque la fermeture (50) est ouverte.

6. Dispositif de fixation (1) selon l'une des revendications 1 à 5, **caractérisé en ce que** la première came de commande (92) est bombée à l'encontre de la force du ressort qui agit.

7. Dispositif de fixation (1) selon l'une des revendications 1 à 6, **caractérisé en ce que**, par un mouvement de rotation de l'ouvreur (70), l'élément de palier (64) peut être déplacé de la première position d'extrémité (92.2) de la première came de commande (92) à la deuxième position d'extrémité (92.3) de la première came de commande (92).

8. Dispositif de fixation (1) selon l'une des revendications 1 à 7, **caractérisé en ce que** la deuxième came de commande (93) est courbée dans sa zone d'extrémité située sur un rayon plus petit autour du point de rotation de l'ouvreur (70), en sens inverse du sens de rotation de l'ouvreur (70) lors de l'ouverture de la fermeture (50).

9. Dispositif de fixation (1) selon l'une des revendications 1 à 8, **caractérisé en ce que** la première came de commande (92) est orientée, dans la zone de sa première position d'extrémité (92.2), transversalement à l'action de la force de l'élément de transmission (60) de telle sorte que l'élément de palier (64) est maintenu de manière autobloquante dans la première position d'extrémité (92.2) lorsque la fermeture (50) est fermée.

10. Dispositif de fixation (1) selon l'une des revendications 1 à 9, **caractérisé en ce que** l'élément de transmission (60) est articulé sur la fermeture (50) par l'intermédiaire d'une liaison pivotante/coulissante côté fermeture, à distance de l'axe de rotation de la fermeture (50), **en ce que** la liaison pivotante/coulissante côté fermeture présente une première et une deuxième courbe de guidage (90, 91), et **en ce que** les deux courbes de guidage (90, 91) se croisent.
